# EUROPEAN PATENT SPECIFICATION

(11) **EP 2 091 223 B1**
(45) Date of publication and mention of the grant of the patent: **11.09.2013**
(21) Application number: 09250316.8
(22) Date of filing: 09.02.2009
(51) Int. Cl.: H04N 1/00, H04N 1/191

(54) **Image reading device and image forming apparatus**
Bildlesevorrichtung und Bilderzeugungsvorrichtung
Dispositif de lecture d'image et appareil de formation d'image

(30) Priority: 12.02.2008 JP 2008030339
(43) Date of publication of application: 19.08.2009
(73) Proprietor: Ricoh Company, Ltd., Tokyo 143-8555 (JP)
(72) Inventor: Takahashi, Hiroshi, Yokohama-shi, Kanagawa (JP); Satoh, Nobuyuki, Yokohama-shi, Kanagawa (JP); Yoshimaru, Akito, Yokohama-shi, Kanagawa (JP); Kobayashi, Masato, Sagamihara-shi, Kanagawa (JP); Sakurada, Yuichi, Machida-shi, Tokyo (JP); Sakurai, Yasuo, Yokohama-shi, Kanagawa (JP)
(74) Representative: Mounteney, Simon James

(56) References cited:
- JP-A- 56 013 870
- JP-A- 57 099 080
- US-A- 4 465 939
- US-A- 4 675 745
- US-A- 5 942 746

## Description

### BACKGROUND OF THE INVENTION

### 1. Field of the Invention

The present invention generally relates to an image reading device in accordance with claim 1 and an image forming apparatus in accordance with claim 8.

### 2. Description of the Related Art

Image reading devices read documents of various sizes. Some image reading devices read large documents such as A0 size documents.

If the image reading devices are configured to read such a large document while moving an optical system, the image reading devices require not only a large size contact glass on which the document is placed but also a large size carriage for moving the optical system. Therefore, most of the image reading devices for large paper are configured to read a document using a contact line image sensor while moving the document.

The contact line image sensor needs to have a length in the main scanning direction at least equal to the document width or greater. For example, to read an A0 size document, the length of the line image sensor needs to be 841 mm or greater. Producing such a line image sensor with one chip is technically difficult and results in increased costs.

For this reason, a technique is used that acquires image information of an entire scanning line using plural small line image sensors arranged in the main scanning direction by focusing light beams from a scanning line of a document onto each of the line image sensors and electrically combining image signals read by the line image sensors. According to this technique using plural line image sensors, it is necessary that reading areas of adjacent line image sensors partially overlap each other in order to prevent a misalignment in a resulting image at a connection point between image data pieces read by the adjacent line image sensors.

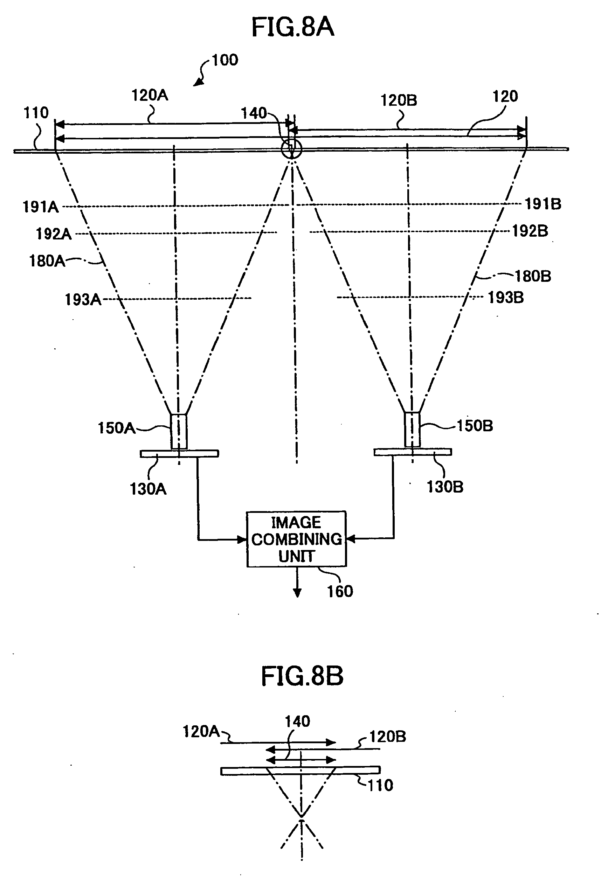

FIGS. 8A and 8B are schematic diagrams illustrating the configuration of a related art image reading device 100. The image reading device 100 includes two imaging elements 150A and 150B and two line image sensors 130A and 130B. In this example, reflection members 191A, 192A, and 193A for optical path change are disposed in an optical path 180A between a contact glass 110 and the imaging element 150A. Similarly, reflection members 191B, 192B, and 193B for optical path change are disposed in an optical path 180B between the contact glass 110 and the imaging element 150B.

The line image sensors 130A and 130B together read a reading width area 120 on the contact glass such that a portion of the reading width area 120 is read by both the line image sensors 130A and 130B. In other words, as shown in FIG. 8B, reading width areas 120A and 120B of the line image sensors 130A and 130B partially overlap in an overlapping area 140. Two image data pieces read and output from the reading width areas 120A and 120B are combined and output as one image data piece of the reading width area 120 by an image combining unit 160.

In the case of combining the image data pieces read by the plural line image sensors 130A and 130B as described above, a reference pattern provided in the overlapping area 140 of the reading width areas 120A and 120B of the line image sensors 130A and 130B is read and the read image signals are electrically combined, thereby obtaining an image without misalignment (see Japanese Laid-Open Patent Publication No. 62-101170 (Patent Document 1) and Japanese Laid-Open Patent Publication No. 56-126373 (Patent Document 2)).

As described above, it is possible to obtain an image without misalignment by arranging reading areas of adjacent line image sensors to partially overlap and electrically combining image signals read in the overlapping area. However, in the case where no image signal is read in the overlapping area of the reading areas of the line image sensors (in the case where there are no characters or images in the overlapping area), it is not possible to electrically combine the image signals.

Furthermore, in the case of such an image reading device, even if the overlapping area of reading areas of line image sensors are precisely adjusted at the time of manufacturing, the reading areas of the line image sensors might be displaced due to vibration during transportation, deformation of the device body at the time of installation, or the like. The displacement of the reading areas varies the overlapping area, which causes misalignment in a resulting image. Moreover, imaging optical systems normally require conjugation length in the range of about 500 mm - 800 mm and have a reduction ratio of about 1/15. Accordingly, even a displacement of only 10 µm at the CCD side results in a displacement as great as 150 µm on the document surface.

Displacement of the line image sensor is caused not only during manufacture, but also caused by thermal expansion due to temperature changes in the image reading device during use of the image reading device. Such displacement may occur in both the main scanning direction and the sub scanning direction.

Japanese Laid-Open Patent Publication No. 2000-358140 (Patent Document 3) discloses an image reading device in which plural line image sensors are arranged. The line image sensors read a marker formed as an image in an overlapping coverage area of the line image sensors, and a relative position of each line image sensor with respect to the marker is determined using the magnitude of the output of that line image sensor as a criterion for the determination. Then, the positions of the line image sensors are shifted based on the determination results to eliminate displacement in the sub scanning direction.

Japanese Laid-Open Patent Publication No. 2006-25289 (Patent Document 4) discloses an image reading device that includes a marker unit. The marker device includes a first correction pattern extending in a sub scanning direction, second correction patterns that have a sub scanning coordinate uniquely determined with respect to a main scanning coordinate in the main scanning direction on a scanning plane and that intersect with a read line of each image sensor at two points, and a marker irradiator for irradiating beams onto the first correction pattern and the second correction patterns.

However, the image reading device of Patent Document 3 needs to have an additional LED or lens for forming a marker as an image and the image reading device of Patent Document 4 needs to have the marker irradiator for irradiating beams onto the correction patterns and therefore both the reading devices have an increased number of component parts.

Further, both the image reading devices of Patent Documents 3 and 4 are configured to display a reference marker in a document reading position and hence, if the reference marker is in an optical path when reading a document, information of the reference marker is incorporated into image information obtained by reading the document, which may result in a negative effect. That is, if the reference marker is displayed when reading a document, information of the reference marker is incorporated into image information obtained by reading the document, which may result in a negative effect.

US Patent 4,675,745 discloses an image reading apparatus according to the pre-characterizing portion of Claim 1.

The invention is in the device of Claim 1.

The present invention is capable of adjusting misalignment when combining images read by line image sensors and capable of preventing a marker from being incorporated as image information when reading a document.

The above-described image reading device can obtain data for image data connection without requiring a device for displaying a position correction marker or a device for moving the position correction marker.

### BRIEF DESCRIPTION OF THE DRAWINGS

FIG. 1 is a perspective view illustrating a wide digital copier as an image forming apparatus according to an embodiment of the present invention;
FIGS. 2A and 2B are schematic diagrams illustrating an optical system of an image reading device according to an embodiment;
FIG. 3 is a schematic side view illustrating an image reading device according to an embodiment;
FIG. 4 is a schematic diagram for explaining displacement detection and compensation using a position correction marker;
FIG. 5A is a schematic diagram illustrating the data arrangement in line buffers before displacement compensation;
FIG. 5B is a schematic diagram illustrating the data arrangement in line buffers after displacement compensation;
FIG. 6 is a schematic diagram illustrating a modified image reading device according to an embodiment;
FIG. 7 is a plan view illustrating a reflection member of a first stage of the image reading device of FIG. 6; and
FIGS. 8A and 8B are schematic diagrams illustrating the configuration of a related art image reading device.

### DETAILED DESCRIPTION OF THE PREFERRED EMBODIMENT

Preferred embodiments of the present invention are described below with reference to the accompanying drawings.

### <Embodiments>

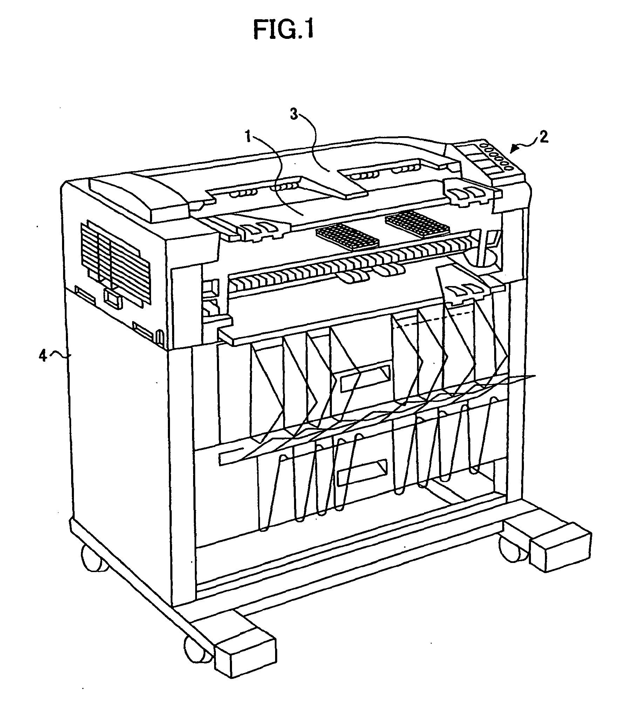

An image forming apparatus according to an embodiment of the present invention is described with reference to the accompanying drawings. FIG. 1 is a perspective view illustrating a wide digital copier as the image forming apparatus according to this embodiment of the present invention. As illustrated in FIG. 1, the copier of this embodiment includes a document table 1 for document insertion and an operations panel 2 at the front of the apparatus such that a user stands in front of the document table 1 and performs necessary operations such as pressing keys on the operations panel 2 while inserting a document. The wide digital copier includes an image reading device for reading a document, a feeding device, an image forming device, a transfer device (not shown), and a fixing device in an apparatus main body 4.

A user places a large sheet (e.g., A0 vertical size and A1 horizontal size) on the document table 1, and manually inserts the sheet into a document unit 3 so that the sheet hits a predetermined point. Then, the document is transported to a reading position, in which the image surface of the document is read by the image reading device. After acquiring image data by this document scanning operation, the image forming apparatus causes the feeding device to feed a transfer sheet, causes the image forming device to execute an image formation process, causes the transfer device to transfer a toner image onto the transfer sheet, and causes the fixing unit to fix the toner image onto the transfer sheet, thereby performing an image forming operation. Note that the typical configurations and functions of the feeding device, the image forming device, the transfer device, and the fixing device in the apparatus main body 4 are well known in the art and are not described herein.

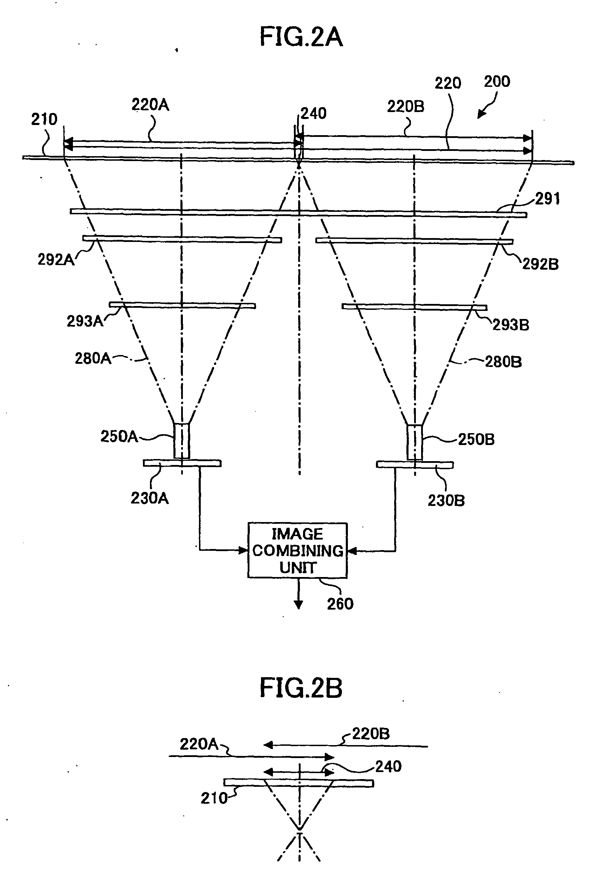

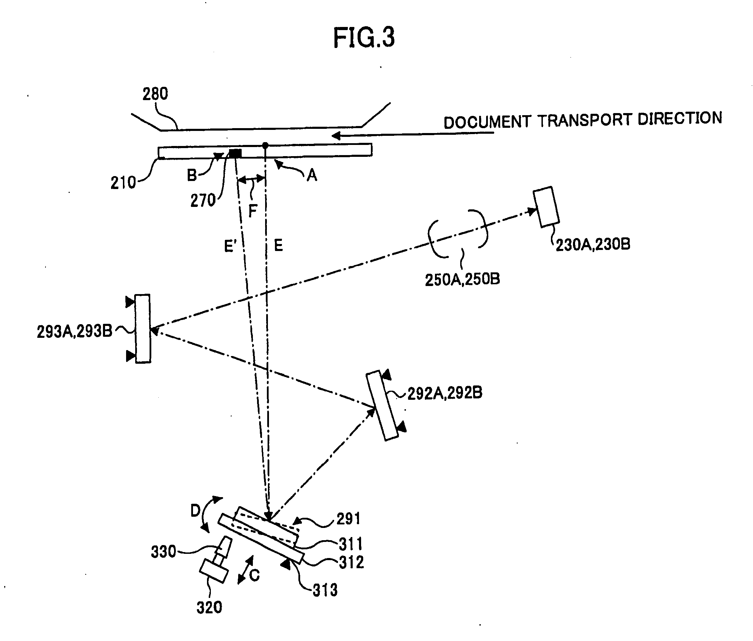

Next, an image reading device is described. FIGS. 2A and 2B are schematic diagrams illustrating an optical system of an image reading device 200 according to an embodiment. FIG. 3 is a schematic side view illustrating the image reading device 200 of this embodiment. As shown in FIG. 2A, the image reading device 200 includes two line image sensors 230A and 230B of which reading areas partially overlap. The line image sensors 230A and 230B read image reading width areas 220A and 220B, respectively, from an image reading width area 220 of a contact glass 210, and image data pieces of these two image reading width areas 220A and 220B are combined and output as one image data piece.

Further, the image reading device 200 includes an optical path changing unit (described below) in the optical system. As shown in FIG. 3, the line image sensors 230A and 230B read images from two reading position, namely a document reading position A for reading a document and a marker reading position B for reading a position correction marker 270 for acquiring a position correction signal to be used when an image combining unit 260 (FIG. 2A) combines images.

Further, the image reading device 200 includes two imaging lenses 250A and 250B as imaging elements for focusing images onto the line image sensors 230A and 230B, respectively. A platen 280 is disposed at the upper side of the contact glass 210, and an illuminating device (not shown) for illuminating a document on the contact glass 210 is disposed at the lower side of the contact glass 210.

Between the contact glass 210 and the imaging lenses 250A and 250B, a reflection member 291 of a first stage, reflection members 292A and 292B of a second stage, and reflection members 293A and 293B of a third stage are disposed as the optical system including the optical path changing unit.

As shown in FIG. 2A, the imaging lenses 250A and 250B focus images of the image reading width areas 220A and 220B, which are part of the image reading width area 220, onto the line image sensors 230A and 230B, respectively. As shown in FIG. 2B, the image reading width areas 220A and 220B have an overlapping area 240. The image of the overlapping area 240 is read by both the line image sensors 230A and 230B. The line image sensors 230A and 230B are connected to the image combining unit 260. Two image data pieces from the line image sensors 230A and 230B are combined and output as one image data piece by the image combining unit 260.

Plural reflection members are arranged in optical paths 280A and 280B from the contact glass 210 to the line image sensors 230A and 230B. In this embodiment, the reflection member 291 of the first stage, the reflection members 292A and 292B of the second stage, and the reflection members 293A and 293B of the third stage are arranged in this order from the contact glass 210 side. In this embodiment, the reflection members 292A and 292B and the reflection members 293A and 293B are disposed with their mounting angles fixed.

The position correction marker 270 is disposed, in the overlapping area 240 in the main scanning direction, in a position spaced apart from the document reading position A by a predetermined distance on the contact glass 210. The position in which the position correction marker 270 is disposed is a marker reading position B.

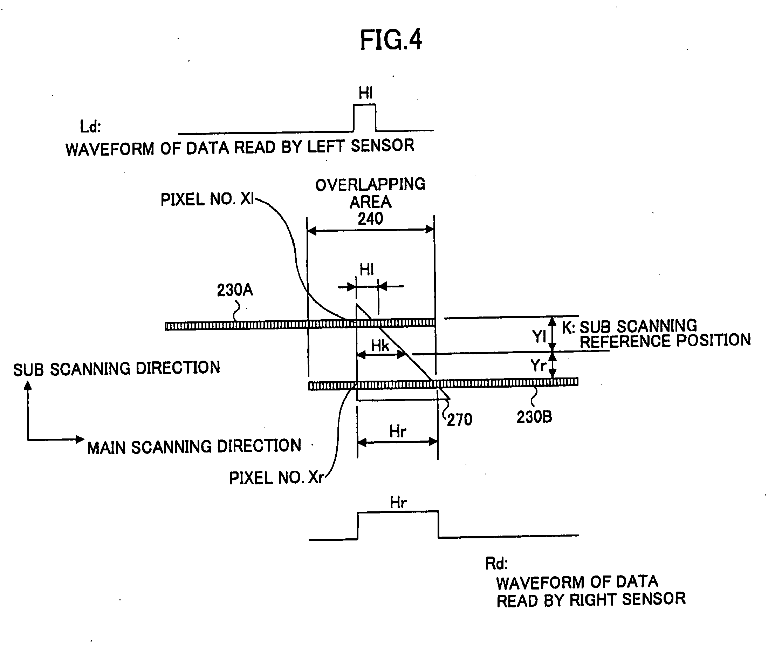

The position correction marker 270 has the shape of a triangle with a side perpendicular to the main scanning direction and is formed of a reduction unit for reducing the amount of only the light that passes through the contact glass 210 by, for example, about 25% (see FIG. 4). More specifically, the position correction marker 270 is formed by firmly bonding, for example, a thin-film filter or an ND filter having a visible light transmission of about 75%, to the contact glass 210 through uniform application of transparent adhesive.

Next, the optical path changing unit is described. The optical path changing unit is implemented as the first reflection member 291, a motor 320, and a drive member 330 that is driven by the motor 320 to rotate a substrate 312.

The reason for the reflection member closest to the reading position, namely, the reflection member 291 of the first stage, being used as the optical path changing unit is as follows. In the case of changing an optical path by rotating a reflection member, if there is an error in the rotational angle, the position from which information is read is displaced from a predetermined reading position. Such displacement due to an error in the rotational angle is proportional to the optical path length. Accordingly, the smaller the distance between a reflection member to be rotated and the document reading position A is, the smaller the displacement can be. Therefore, in this embodiment, the reflection member 291 of the first stage closest to the reading position is used as the optical path changing unit, thereby reducing the effects of rotational angle errors and improving the image reading accuracy.

As shown in FIG. 3, the reflection member 291 includes the substrate 312 rotatably supported by a support point 313, and a seamless continuous reflection mirror 311 for reflecting all the light reflected from the image reading width area 220. The motor 320 is driven by a control device (not shown) to advance and retract the drive member 330 (the arrows C). Advancement and retraction of the drive member 330 cause the reflection member 291 to swing (the arrows D), thereby switching (the arrows F) the light to be incident on the line image sensors 230A and 230B between the lights (E and E' in FIG. 3) from the predetermined document reading position A and marker reading position B on the contact glass 210. Note that the orientation of the reflection member 292A and 292B of the second stage and the reflection members 293A and 293B is fixed. In this embodiment, since the seamless continuous reflection mirror 311 is used in the reflection member 291, it is possible to change the angles of the optical paths 280A and 280B to the line image sensors 230A and 230B at the same time and by the same amount and therefore it is possible to prevent generating errors between the line image sensors 230A and 230B.

Further, in this embodiment, the optical path length from the imaging lenses 250A and 250B to the marker reading position B is equal to the optical path length from the imaging lenses 250A and 250B to the document reading position A. Accordingly, the document and the position correction marker 270 can be read under the same conditions and hence at the same focus depth. Therefore, it is possible to improve the image adjustment accuracy.

Operations of the image reading device 200 of this embodiment are described below. First, an operation of reading the position correction marker 270 is described. To read the position correction marker 270, the motor 320 is driven by the control device (not shown) to cause the drive member 330 to rotate the reflection member 291 such that the reflection light from the marker reading position B is made incident on the line image sensors 230A and 230B (E' in FIG. 3). Then, the image of the position correction marker 270 in the marker reading position B is focused onto the line image sensors 230A and 230B by the imaging lenses 250A and 250B, respectively, thereby reading the image of the position correction marker 270. Thus, data for correcting two image data pieces to be obtained by the line image sensors 230A and 230B are obtained.

Next, an operation of reading a document is described. To read a document, the motor 320 is driven by the control device (not shown) to cause the drive member 330 to rotate the reflection member 291 such that the reflection light from the document reading position A is made incident on the line image sensors 230A and 230B (E in FIG. 3). Then, while transporting the document between the contact glass 210 and the platen 280, a document image in the document reading position A is focused onto the line image sensors 230A and 230B by the imaging lenses 250A and 250B, respectively, thereby reading image data. The reflection light of the document in the document reading position A is reflected by the reflection members 291 of the first stage, the reflection members 292A and 292B of the second stage, and the reflection members 293A and 293B of the third stage and is focused onto the line image sensors 230A and 230B by the imaging lenses 250A and 250B, respectively.

The line image sensors 230A and 230B output image data pieces in the image reading width areas 220A and 220B, respectively, having the overlapping area 240. Adjustment for preventing displacement in the sub scanning direction is performed at the time of manufacturing. The adjustment in the sub scanning direction is performed by adjusting the positions and angles of the imaging lenses 250A and 250B, the position and angle of the line image sensors 230A and 230B, and the like such that the MTF, magnification, registration errors, and the like fall within standards. Adjustment of displacement in the main scanning direction is performed at the same time.

Displacement compensation in the main scanning direction is described below. The conjugation length of an imaging optical system is as great as about 600 mm and therefore, if the line image sensors 230A and 230B or the imaging lenses 250A and 250B are slightly displaced, the reading position of the scanning line on the contact glass 210 is easily displaced by 1 dot or greater, which results in image degradation. In particular, vibration during transportation of the device and thermal expansion due to temperature change in the device tend to cause displacement.

In this embodiment, such displacement of the optical system is detected and compensated for. FIG. 4 is a schematic diagram for explaining displacement detection and compensation using the position correction marker 270. In this embodiment, as mentioned above, the position correction marker 270 has the shape of a triangle with a side perpendicular to the main scanning direction.

The line image sensor 230A and the line image sensor 230B have the overlapping area 240 in the main scanning direction. When K is a reference position in the sub scanning direction, the line image sensors 230A and 230B are displaced from the reference position K by Yl and Yr, respectively, in the sub scanning direction.

With regard to compensation in the main scanning direction, suppose that the position correction marker 270 is read from the left side in the main scanning direction by the line image sensors 230A and 230B. When the pixel before detection of the position correction marker 270 by the line image sensor 230A is X1 and the first pixel after detection of the position correction marker 270 by the line image sensor 230B is Xr, the next pixel after the pixel Xl is defined as Xr, which enables combining data pieces of the two line image sensors 230A and 230B in the main scanning direction.

With regard to compensation in the sub scanning direction, the width of the position correction marker 270 in the reference position K in the sub scanning direction is Hk; the detected width of the position correction marker 270 by the line image sensor 230A is Hl; and the detected width of the position correction marker 270 by the line image sensor 230B is Hr. Since the position correction marker 270 has a triangular shape, the widths Hl and Hr are uniquely determined based on the position in the sub scanning direction. Accordingly, based on the values of the widths Hl and Hr detected by the line image sensors 230A and 230B, respectively, the number of lines corresponding to the displacement amount of each of the line image sensors 230A and 230B from the reference position K can be calculated.

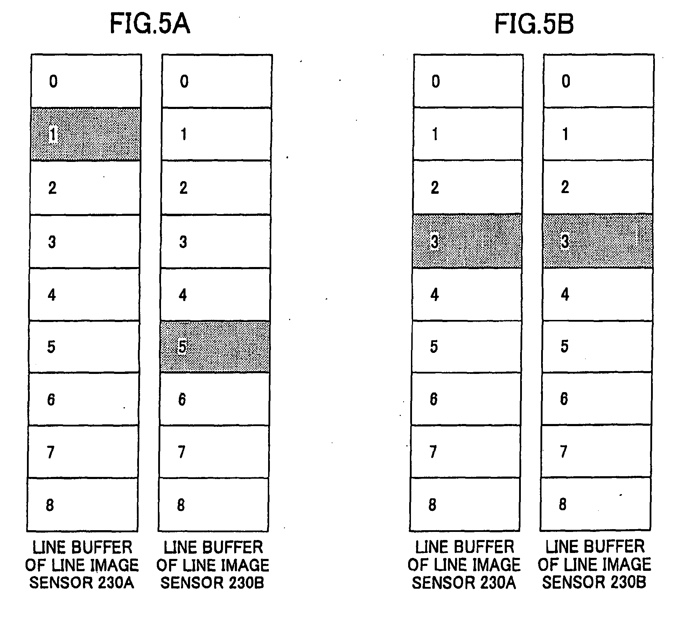

Next, an operation of compensating for displacement in units of pixels in the main scanning direction using the position correction marker 270 is described. FIG. 5A is a schematic diagram illustrating the data arrangement in line buffers before displacement compensation, and FIG. 5B is a diagram illustrating the data arrangement in the line buffers after displacement compensation. In this operation, liner image data obtained by each of the line image sensors 230A and 230B are stored in the corresponding line buffer (FIG. 5A). There is a displacement of 4 pixels between end edge images (shaded regions in FIG. 5A) of the position correction marker 270, which is a reference for displacement of the line image sensors 230A and 230B, detected by the line image sensors 230A and 230B. To perform displacement compensation, the starting addresses of outputs of the line buffers are increased or reduced to match the end edge images of the position correction marker 270. Compensation in the sub scanning direction can be performed in a similar manner.

In the image reading device 200 of this embodiment, it is possible to compensate for displacement of less than one pixel. Displacement of less than one pixel can be compensated for by performing resampling in units of pixels or less. Resampling can be performed by two-dimensional interpolation using cubic function convolution, sinc function interpolation, linear interpolation or the like. This compensation can be performed in the main scanning direction and the sub scanning direction at the same time.

After compensation for displacement of two optical systems in the main scanning direction, a density boundary might appear at the connection point in the main scanning direction. The image quality may be improved by multiplying the image data of the overlapping area by a coefficient and performing image processing. Further, the image quality in the sub scanning direction may be improved by changing the number of pixels to be multiplied by a coefficient, changing the coefficient itself, and determining the necessity of image processing for each main scanning line.

According to an embodiment of the present invention, an image data correction device may perform displacement compensation when turning on the main power of an image forming apparatus or an image reading device. Creation of compensation data may be performed when the image forming apparatus or the image reading device is in the standby mode. This prevents displacement compensation from remaining unperformed for a long time.

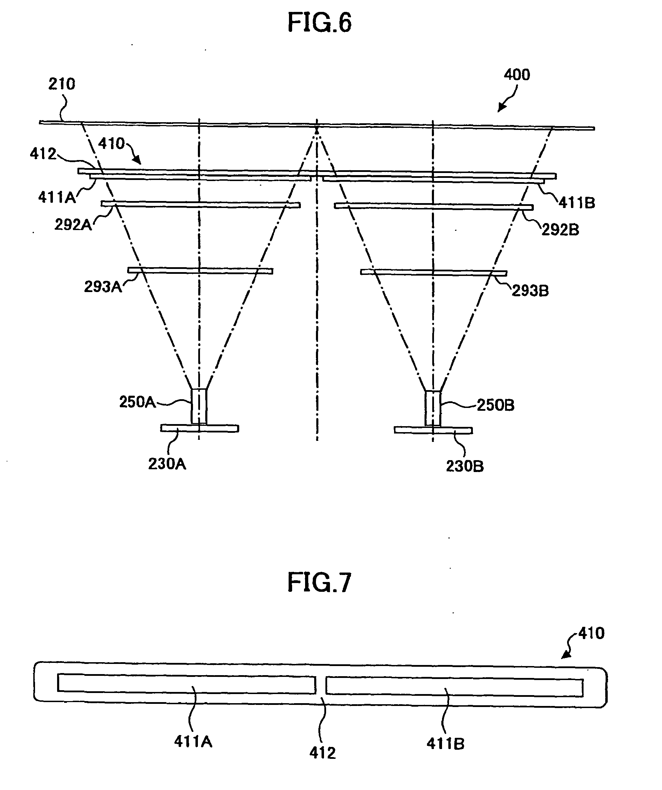

In the image reading device 200, the reflection member 291 of the first stage includes the single continuous reflection mirror 311, which is arranged to cross the optical paths 280A and 280B. However, the reflection member 291 of the first stage may be formed of plural reflection mirrors. FIG. 6 is a schematic diagram illustrating a modified image reading device 400 according to an embodiment. FIG. 7 is a plan view illustrating a reflection member 411 of a first stage of the image reading device of FIG. 6. The image reading device of this embodiment has the same configuration as the image reading device 200 of the embodiment described above except that the reflection member 411 includes two reflection mirrors 411A and 411B arranged in the main scanning direction and a connecting member 412 for connecting the reflection mirrors 411A and 411B. In this embodiment, the two reflection mirrors 411A and 411B are disposed in the optical paths 280A and 280B, respectively, and the connecting member 412 is rotated by the motor 320 and the drive member 330. Therefore, it is possible to rotate the two reflection mirrors 411A and 411B at the same time to switch the position to be read by the line image sensors 230A and 230B between the document reading position A and the marker reading position B.

In this embodiment, the reflection mirrors 411A and 411B do not need to be so large and may be those commonly used for A3 size, which allows implementing this optical path changing configuration at low cost.

## Claims

1. An image reading device (200) comprising:
an imaging element configured to focus a document image produced by reflection light of a document in a predetermined document reading position (A);
plural line image sensors (230A, 230B) arranged in a main scanning direction in an imaging position of the document image to read the document image such that pieces of the document image read by the line image sensors overlap (240) each other at adjacent ends in the main scanning direction;
an optical system (311, 312, 292A, 2928, 293A, 293B, 250A, 250B) disposed between the document and the line image sensors to guide the reflection light to the line image sensors;
an image combining unit (260) configured to combine plural image data pieces obtained by the plural line image sensors;
and a position correction marker (270) disposed at a marker reading position (B), which is a predetermined position different from the document reading position (A), in an area that can be read by the plural line image sensors;
**characterized in that** the optical system includes an optical path changing unit (320, 330, 311, 312, 313) configured to switch a reading position of the line imagr sensors between the document reading position (A) and the marker reading position (B);
and **in that** the image combining unit (260) is configured to determine a connection position (X1, Xr) in the main scanning direction of each of the image data pieces of the line image sensors in units of pixels of the line image sensors based on positional information detected using the position correction marker, the connection positions (X1, Xr) being the pixel before detection of the correction marker (270) by one of the line image sensors (230A) and the pixel after detection of the correction marker by the other line image sensor (230B), and to perform compensation in units of pixels in the main scanning direction by combining the data from the line image sensors such that the respective connection positions (X1, Xr) are sequential pixels;
and is further configured to perform compensation in the main- and/or sub-scanning direction by less than one pixel by re-sampling the data from the line image sensors in units of pixels or less by two-dimensional interpolation using cubic function convolution, sinc function interpolation or the like.

2. The image reading device as claimed in claim 1, **characterized in that**:
the optical system includes a reflaction member (311) configured to fold an optical path; and
the optical path changing unit includes the reflection member and a driving and rotating unit (320, 330) configured to drive and rotate the reflection member.

3. The image reading device as claimed in claim 2, **characterized in that** the reflection member (311) of the optical path changing unit includes a continuous reflection mirror configured to direct all the reflection light from the document reading position to the line image sensors.

4. The image reading device as claimed in claim 2, **characterized in that** the reflection member of the optical path changing unit includes plural reflection mirrors (411A, 411B) arranged in the main scanning direction, and a connecting member (412) connecting the reflection mirrors such that the reflection mirrors are driven and rotated together by the driving and rotating unit.

5. The image reading device as claimed in any one of claims 1 to 4, **characterized in that**:
the optical system includes plural reflection members (311, 292A, 292B, 293A, 293B); and
the reflection member (291) included in the optical path changing unit is one of the plural reflection members that is closest to the document reading position.

6. The image reading device as claimed in any one of claims 1 through 5, **characterized in that** a length of an optical path from the imaging element (230A, 230B) to the marker reading position (B) is equal to a length of an optical path from the imaging element to the document reading position (A).

7. The image reading device as claimed in any preceding claim, wherein the marker (270) has a width in the main scanning direction which varies according to the position along the marker in a sub-scanning direction perpendicular to the main scanning direction; and the image combining unit (260) comprises means for detecting the widths (H1, Hr) of the marker in the respective image data pieces and deriving from those widths, and from the predetermined variation of marker width with sub-scanning direction position, the number of scanning lines corresponding to the displacement (Y1, Yr) of each line image sensor from a reference position (K) in the sub-scanning direction.

8. An image forming apparatus **characterized by** comprising the image reading device according to any one of claims 1 through 7.

## Patentansprüche

1. Bildlesevorrichtung (200), umfassend:
ein Bildleseelement, das dafür konfiguriert ist, ein Dokumentbild zu fokussieren, das durch Reflexionslicht eines Dokuments in einer vorbestimmten Dokumentleseposition (A) erzeugt wird;
mehrere Zeilenbildsensoren (230A, 230B), die in einer Hauptabtastrichtung in einer Abbildungsposition des Dokumentbildes angeordnet sind, um das Dokumentbild zu lesen, so dass durch die Zeilenbildsensoren gelesene Stücke des Dokumentbildes einander an benachbarten Enden in der Hauptabtastrichtung überlappen (240);
ein optisches System (311, 312, 292A, 292B, 293A, 293B, 250A, 250B), das sich zwischen dem Dokument und den Zeilenbildsensoren befindet, um das Reflexionslicht zu den Zeilenbildsensoren zu führen;
eine Bildkombiniereinheit (260), die dafür konfiguriert ist, mehrere durch die Zeilenbildsensoren erlangte Bilddatenstücke zu kombinieren;
und einen Positionskorrekturmarker (270), der sich an einer Markerleseposition (B) befindet, die eine sich von der Dokumentleseposition (A) unterscheidende vorbestimmte Position in einem Bereich, der durch die mehreren Zeilenbildsensoren gelesen werden kann, ist;
**dadurch gekennzeichnet, dass** das optische System eine Wechseleinheit für den optischen Weg (320, 330, 311, 312, 313) hat, die dafür konfiguriert ist, eine Leseposition der Zeilenbildsensoren zwischen der Dokumentleseposition (A) und der Markerleseposition (B) umzuschalten;
und dadurch, dass die Bildkombiniereinheit (260) dafür konfiguriert ist, auf der Grundlage von Lageinformation, die unter Verwendung des Positionskorrekturmarkers ermittelt wurde, in der Hauptabtastrichtung jedes der Bilddatenstücke der Zeilenbildsensoren eine Verbindungsposition (X1, Xr) in Bildpunkteinheiten der Zeilenbildsensoren zu bestimmen, wobei die Verbindungspositionen (X1, Xr) der Bildpunkt vor der Ermittlung des Korrekturmarkers (270) durch einen der Zeilenbildsensoren (230A) und der Bildpunkt nach der Ermittlung des Korrekturmarkers durch den anderen Zeilenbildsensor (230B) sind, und einen Ausgleich in Bildpunkteinheiten in der Hauptabtastrichtung durchzuführen, indem die Daten von den Zeilenbildsensoren so kombiniert werden, so dass die jeweiligen Verbindungspositionen (X1, Xr) aufeinanderfolgende Bildpunkte sind;
und ferner dafür konfiguriert ist, einen Ausgleich in der Haupt- und/oder Nebenabtashichtung um weniger als einen Bildpunkt durchzuführen, indem die Daten von den Zeilenbildsensoren durch zweidimensionale Interpolation unter Verwendung von kubischer Funktionsfaltung, Sinusfunktionsinterpolation oder dergleichen in Einheiten von Bildpunkten oder weniger umgerechnet werden.

2. Bildlesevorrichtung nach Anspruch 1, **dadurch gekennzeichnet, dass**:
das optische System ein Reflexionsteil (311) einschließt, das dafür konfiguriert ist, einen optischen Weg zu falten; und
die Wechseleinheit für den optischen Weg das Reflexionsteil und eine Vorschub- und Dreheinheit (320, 330), die dafür konfiguriert ist, das Reflexionsteil zu verschieben und zu drehen, einschließt.

3. Bildlesevorrichtung nach Anspruch 2, **dadurch gekennzeichnet, dass** das Reflexionsteil (311) der Wechseleinheit für den optischen Weg einen Spiegel für kontinuierliche Reflexion einschließt, der dafür konfiguriert ist, alles Reflexionslicht von der Dokumentleseposition zu den Zeilenbildsensoren zu richten.

4. Bildlesevorrichtung nach Anspruch 2, **dadurch gekennzeichnet, dass** das Reflexionsteil der Wechseleinheit für den optischen Weg mehrere in der Hauptabtastrichtung angeordnete Reflexionsspiegel (411A, 411B) und ein die Reflexionsspiegel verbindendes Verbindungsteil (412) einschließt, so dass die Reflexionsspiegel gemeinsam durch die Vorschub- und Dreheinheit verschoben und gedreht werden.

5. Bildlesevorrichtung nach einem der Ansprüche 1 bis 4, **dadurch gekennzeichnet, dass**:
das optische System mehrere Reflexionsteile (311, 292A, 292B, 293A, 293B) einschließt; und
das in die Wechseleinheit für den optischen Weg einbezogene Reflexionsteil (291) eines der mehreren Reflexionsteile ist, das sich am nächsten an der Dokumentleseposition befindet.

6. Bildlesevorrichtung nach einem der Ansprüche 1 bis 5, **dadurch gekennzeichnet, dass** eine Länge eines optischen Weges vom abbildenden Element (230A, 230B) zur Markerleseposition (B) gleich einer Länge eines optischen Weges vom abbildenden Element zur Dokumentleseposition (A) ist.

7. Bildlesevorrichtung nach einem der vorhergehenden Ansprüche, worin der Marker (270) in der Hauptabtastrichtung eine Breite hat, die sich entsprechend der Position längs des Markers in einer Nebenabtastrichtung senkrecht zur Hauptabtastrichtung ändert; und die Bildkombiniereinheit (260) Mittel zum Ermitteln der Breiten (H1, Hr) des Markers in den jeweiligen Bilddatenstücken und zum aus diesen Breiten und der vorbestimmten Änderung der Markerbreite mit der Nebenabtastrichtungsposition erfolgenden Ableiten der Anzahl der Abtastzeilen, die dem Versatz (Y1, Yr) jedes Zeilenbildsensors gegenüber einer Referenzposition (K) in der Nebenabtastrichtung entsprechen, umfasst.

8. Bildgebende Vorrichtung, **dadurch gekennzeichnet, dass** sie die Bildlesevorrichtung nach einem der Ansprüche 1 bis 7 umfasst.

## Revendications

1. Dispositif de lecture d'image (200) comprenant :
un élément d'imagerie conçu pour focaliser une image de document produite par une lumière de réflexion d'un document dans une position prédéterminée de lecture de document (A) ;
une pluralité de capteurs d'image de ligne (230A, 230B) agencés dans une direction principale de balayage dans une position d'imagerie de l'image de document pour lire l'image de document de sorte que des parties de l'image de document lues par les capteurs d'image de ligne se chevauchent (240) à leurs extrémités adjacentes dans la direction principale de balayage ;
un système optique (311, 321, 292A, 292B, 293A, 293B, 250A, 250B) placé entre le document et les capteurs d'image de ligne pour guider la lumière de réflexion vers les capteurs d'image de ligne ;
une unité de combinaison d'image (260) conçue pour combiner une pluralité de parties de données d'image obtenues par la pluralité de capteurs d'image de ligne ;
et un repère de correction de position (270) placé à une position de lecture de repère (B), qui est une position prédéterminée différente de la position de lecture de document (A), dans une zone qui peut être lue par la pluralité de capteurs d'image de ligne ;
**caractérisé en ce que** le système optique comprend une unité de modification de trajet optique (320, 330, 311, 312, 313) conçue pour faire basculer la position de lecture des capteurs d'image de ligne entre la position de lecture de document (A) et la position de lecture de repère (B) ;
et **en ce que** l'unité de combinaison d'image (260) est conçue pour déterminer une position de liaison (X1, Xr) dans la direction principale de balayage de chacune des parties de données d'image des capteurs d'image de ligne en unités de pixels des capteurs d'image de ligne sur la base d'informations de position détectées grâce au repère de correction de position, les positions de liaison (X1, Xr) correspondant au pixel qui précède la détection du repère de correction (270) par l'un des capteurs d'image de ligne (230A) et au pixel qui suit la détection du repère de correction par l'autre capteur d'image de ligne (230B), et pour effectuer une compensation en unités de pixels dans la direction principale de balayage en combinant les données provenant des capteurs d'image de ligne de sorte que les positions de liaison respectives (X1, Xr) soient des pixels consécutifs ;
et est conçue en outre pour effectuer une compensation dans la direction principale et/ou auxiliaire de balayage de moins d'un pixel en ré-échantillonnant les données provenant des capteurs d'image de ligne en unités de pixels ou moins par interpolation bidimensionnelle en utilisant la convolution de fonction cubique, l'interpolation de fonction sinc ou similaire.

2. Dispositif de lecture d'image selon la revendication 1, **caractérisé en ce que** :
le système optique comprend un élément réfléchissant (311) conçu pour renvoyer un trajet optique ; et
l'unité de modification de trajet optique comprend l'élément réfléchissant et une unité d'entraînement et de rotation (320, 330) conçue pour entraîner et faire tourner l'élément réfléchissant.

3. Dispositif de lecture d'image selon la revendication 2, **caractérisé en ce que** l'élément réfléchissant (311) de l'unité de modification de trajet optique comprend un miroir réfléchissant continu conçu pour diriger toute la lumière de réflexion de la position de lecture de document vers les capteurs d'image de ligne.

4. Dispositif de lecture d'image selon la revendication 2, **caractérisé en ce que** l'élément réfléchissant de l'unité de modification de trajet optique comprend une pluralité de miroirs réfléchissants (411 A, 411B) agencés dans la direction principale de balayage, et un élément de liaison (412) qui relie les miroirs réfléchissants de sorte que miroirs réfléchissants sont entraînés et mis en rotation ensemble par l'unité d'entraînement et de rotation.

5. Dispositif de lecture d'image selon l'une quelconque des revendications 1 à 4, **caractérisé en ce que** :
le système optique comprend une pluralité d'éléments réfléchissants (311, 292A, 292B, 293A, 293B) ; et
l'élément réfléchissant (291) compris dans l'unité de modification de trajet optique est celui de la pluralité d'éléments réfléchissants qui est le plus proche de la position de lecture de document.

6. Dispositif de lecture d'image selon l'une quelconque des revendications 1 à 5, **caractérisé en ce que** la longueur du trajet optique entre l'élément d'imagerie (230A, 230B) et la position de lecture de repère (B) est égale à la longueur du trajet optique entre l'élément d'imagerie et la position de lecture de document (A).

7. Dispositif de lecture d'image selon l'une quelconque des revendications précédentes, dans lequel le repère (270) a une largeur dans la direction principale de balayage qui varie selon la position le long du repère dans une direction auxiliaire de balayage perpendiculaire à la direction principale de balayage ; et l'unité de combinaison d'image (260) comprend des moyens pour détecter les largeurs (H1, Hr) du repère dans les parties de données d'image respectives et pour calculer à partir de ces largeurs, et en fonction de la variation prédéterminée de la largeur du repère selon sa position dans la direction auxiliaire de balayage, le nombre de lignes de balayage correspondant au déplacement (Y1, Yr) de chaque capteur d'image de ligne à partir d'une position de référence (K) dans la direction auxiliaire de balayage.

8. Appareil de formation d'image **caractérisé en ce qu'**il comprend le dispositif de lecture d'image selon l'une quelconque des revendications 1 à 7.
